# EUROPÄISCHE PATENTSCHRIFT

(11) **EP 1 292 473 B1**
(45) Veröffentlichungstag und Bekanntmachung des Hinweises auf die Patenterteilung: **06.02.2008**
(21) Anmeldenummer: 01949219.8
(22) Anmeldetag: 30.05.2001
(51) Int. Cl.: B60T 13/66, B60T 13/74, B60T 7/04, B60T 7/10, F16H 59/10, F16H 63/48

(54) **KOMBINIERTE STEUEREINRICHTUNG FÜR DIE FESTSTELLBREMS- UND PARKSPERRENFUNKTION VON KRAFTFAHRZEUGEN**
COMBINED CONTROL DEVICE FOR THE PARKING BRAKE AND PARK LOCK FUNCTION OF MOTOR VEHICLES
DISPOSITIF DE COMMANDE COMBINE ASSURANT LA FONCTION D'UN FREIN DE STATIONNEMENT ET LA FONCTION D'UN DISPOSITIF DE BLOCAGE DE STATIONNEMENT DANS DES VEHICULES AUTOMOBILES

(30) Priorität: 08.06.2000 DE 10028350
(43) Veröffentlichungstag der Anmeldung: 19.03.2003
(73) Patentinhaber: Siemens VDO Automotive AG, 93055 Regensburg (DE)
(72) Erfinder: LOIBL, Josef, 93077 Bad Abbach (DE)
(86) Internationale Anmeldenummer: PCT/DE2001/002050
(87) Internationale Veröffentlichungsnummer: WO 2001/094170

(56) Entgegenhaltungen:
- EP-A- 0 972 667
- EP-A- 0 987 473
- DE-A- 19 811 243
- DE-C- 4 401 945

## Beschreibung

Die Erfindung betrifft eine kombinierte Steuereinrichtung für die Feststellbrems- und Parksperrenfunktion von Kraftfahrzeugen mit Automatik- oder automatisiertem Handschalt-Getriebe. Unter Feststellbremsfunktion ist dabei nicht nur die Funktion der herkömmlicherweise durch ein separates Bremspedal links neben der üblichen Pedalerie betätigbaren Feststellbremse, sondern auch der per Stockhebel auf der Mittelkonsole betätigbaren Handbremse zu verstehen.

Zum Hintergrund der Erfindung ist festzuhalten, daß die erwähnten automatischen Getriebe verschiedene Fahrstufen zur Verfügung stellen, die mit den Buchstaben P, R, N und D (P: Park, R: Reverse, N: Neutral, D: Drive) abgekürzt werden. Diese Fahrstufen werden mit einem Wählhebel im Fahrzeug angewählt und korrespondieren mit dem eigentlichen Getriebezustand. Dabei werden in der Stellung D z. B. bei einem 6-Gang-Automatik-Getriebe die verschiedenen Gänge im Getriebe hydraulisch geschaltet. Die Ansteuerung erfolgt dabei durch Ventile, die wiederum durch eine elektronische Getriebesteuerung angesteuert werden.

Die Verbindung zwischen einem dabei beteiligten hydraulischen Wählschieber im Getriebe und dem Wählhebel im Fahrzeuginnenraum wird bei den derzeit in Serie eingesetzten Getriebekonzepten durch ein Gestänge oder einen Bowdenzug realisiert.

Zur Sicherung des abgestellten Fahrzeuges in der Stellung P (Parkstellung) ist eine sogenannte Parksperre oder Schaltsperre (shift-lock) vorgesehen, die ein Wegrollen des abgestellten Fahrzeuges verhindert. Die Funktion dieser Parksperre läßt das Einlegen einer Fahrstufe R oder D aus der Wählhebelstellung P nur dann zu, wenn das Bremspedal und der Zündschlüssel betätigt sind. Bei bekannten Automatikgetrieben ist diese Parksperre in das Getriebe integriert und wirkt auf die sogenannte Rastenplatte ein. Dort rastet nämlich eine Sperrklinke in der Stellung P mit Federkraft in die Rastenplatte ein und verhindert so die Wählhebelbetätigung. Durch Betätigung des Bremspedals und des Zündschlüssels wird mit einem Bowdenzug die Sperrklinke ausgerückt und die Rastenplatte entriegelt. Nachdem die Wählhebelstellung P verlassen ist, kann die Sperrklinke nicht mehr einrasten, da in der Kontur der Rastenplatte keine entsprechenden Rastausnehmungen vorhanden sind. In dieser Stellung bleibt der Bowdenzug zwischen Sperrklinke und Bremspedal gespannt und gibt über einen Auslösehebel am Bremspedal, den zweiten Bowdenzug zum Zündschloß frei. Dadurch wird ein Abziehen des Zündschlüssels während des Fahrbetriebes durch einen Sperrschieber im Zündschloß verhindert. Der Zündschlüssel kann demgegenüber nur dann abgezogen werden, wenn der Bowdenzug zwischen Lenkschloß und Bremspedal gespannt wird und über den Sperrschieber den Zündschlüssel entriegelt. Dieses Spannen des Bowdenzuges erfolgt mit dem erwähnten Sperrhebel durch den zweiten Bowdenzug, sobald die Sperrklinke in die Rastenplatte eingerastet ist.

Eine bekannte Alternative zur mechanischen Auslegung der Parksperre wird mit Hilfe einer integrierten Getriebesteuerung realisiert, wobei über einen geeigneten Aktuator, z. B. ein Schieber-Ventil, die Parksperre elektrisch eingelegt und wieder entriegelt wird. In dieser Version kann der erwähnte Sperrhebel und der ihm zugeordnete Bowdenzug entfallen, ein Aktuator und eine mechanische Sperreinrichtung sind jedoch immer noch erforderlich. Das Dokument EP 0 987 473 A beschreibt eine gattungsgemäße Parksperre.

Moderne Getriebekonzepte, wie sie kurz- bis mittelfristig in die Serienkonstruktion von Fahrzeugen einfließen werden, sehen aus Kosten- und Qualitätsgründen die Integration der Getriebeelektronik direkt in das Getriebe vor, was unter "mechatronischer Getriebesteuerung" verstanden wird. Die mechanische Verbindung zwischen Getriebe und Wählhebel entfällt dabei. Stattdessen wird die Übermittlung der Stellung P, R, N oder D des Wählhebels im Fahrzeuginnenraum zum Getriebe über elektrische Verbindungen realisiert. Dieses Konzept wird als "shift-by-wire-Konzept" bezeichnet.
Der Erfindung liegt nun die Aufgabe zugrunde, auf der Basis der mechatronischen Getriebesteuerung und des shift-by-wire-Konzeptes sowie weiterer Fahrzeug-Funktionen auf einfache Weise eine Parksperrenfunktion eines Automatikgetriebes zu realisieren.

Diese Aufgabe wird durch die im Kennzeichnungsteil des Anspruches 1 angegebenen konstruktiven und funktionstechnischen Merkmale einer kombinierten Steuereinrichtung für die Feststellbrems- und Parksperrenfunktion von Kraftfahrzeugen gelöst. Demnach ist vorgesehen
- eine manuelle Fahrstufen-Eingabeeinheit für die Fahrstufe des Fahrzeuges,
- eine damit verbundene elektronische Wahlmeldeeinheit, die an einen Fahrzeug-Steuerbus angeschlossen ist,
- eine ebenfalls an den Fahrzeug-Steuerbus angeschlossene elektronische Getriebesteuerung, die Aktuatoren zur Einstellung des Getriebes in die jeweils gewünschte, von der Wahlmeldeeinheit gemeldete Fahrstufe ansteuert,
- eine elektronische Feststellbremseinrichtung mit
   = einem elektronischen Feststellbremsfunktions-Steuergerät,
   = einer damit verbundenen manuellen Feststellbrems-Eingabeeinheit für die Deaktivierung/Aktivierung der Handbremsfunktion, und
   = einem ebenfalls mit dem Steuergerät verbundenen Aktuator für die Fahrzeugbremse,
- ein mit dem Fahrzeug-Steuerbus über eine Schnittstelle gekoppelter Bremspedalsensor zur Überwachung der Betätigung des Bremspedals, und
- eine Ablaufsteuerung der vorstehenden Komponenten derart, daß bei Wahl der Parkstellung an der Fahrstufen-Eingabeeinheit über die Wahlmeldeeinheit und den Steuerbus die Feststellbremseinrichtung aktiviert und die Fahrzeugbremse festgestellt wird.

Grundsätzlich wird also aufgrund der vorstehenden Ablaufsteuerung bei Anwahl der Fahrstellung P (Parken) die Fahrzeugbremse festgestellt und damit ein Wegrollen des Fahrzeuges verhindert.

Weitere Verriegelungsmechanismen, wie ein unbeabsichtigtes Lösen der Bremse oder ein Anwählen von Fahrstufen bei undefinierten Fahrzeugzuständen wird durch die in den Unteransprüchen angegebenen Maßnahmen verhindert. Zur Vermeidung von Wiederholungen wird hierzu auf die folgende Beschreibung verwiesen, in der ein Ausführungsbeispiel der Erfindung anhand der beigefügten Zeichnungen näher erläutert wird. Es zeigen:
- Fig. 1: ein Blockdiagramm einer kombinierten Steuereinrichtung für die Feststellbrems- und Parksperrenfunktion von Kraftfahrzeugen, und
- Fig. 2: ein Flußdiagramm der in der Steuereinrichtung realisierten Ablaufsteuerung.

Bei einem shift-by-wire-Konzept eines automatisierten Handschalt- oder Automatikgetriebes ist das "Rückgrat" der Fahrzeug-Steuerbus 1, der z. B. durch einen CAN-Bus realisiert wird. An diesem Steuerbus 1 sind nicht nur die noch zu erörternden Komponenten der erfindungsgemäßen Steuereinrichtung, sondern auch andere elektronische Steuergeräte, wie z. B. das sogenannte "keyless-Go-System" angeschlossen. In dieses System kann eine entsprechende Wegfahrsperren-Funktion integriert sein, die genauso wie verschiedene diagnose- oder sicherheitsrelevante Systeme auf den Steuerbus 1 zugreift.

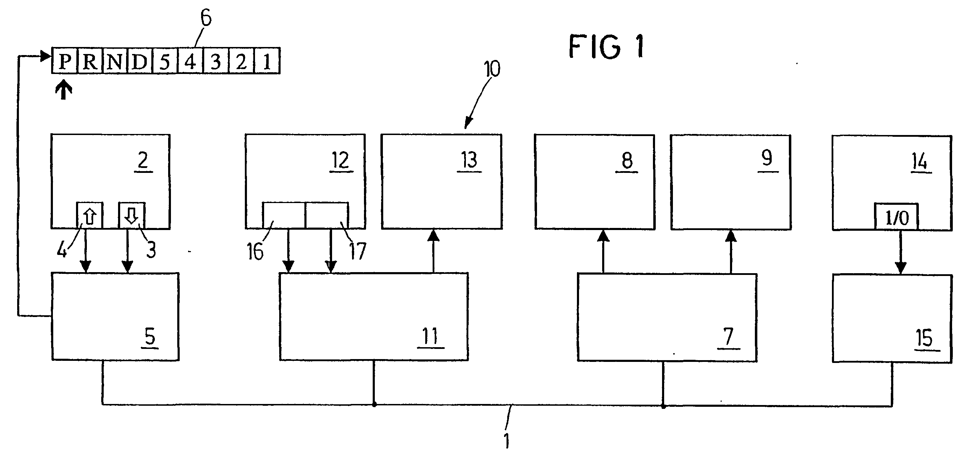

Für die Feststellbrems- und Parksperrenfunktion sind - wie aus Fig. 1 hervorgeht - einerseits verschiedene, dem eigentlichen Getriebe zugeordnete Komponenten relevant. So ist eine Fahrstufen-Eingabeeinheit 2 vorgesehen, bei der es sich beispielsweise um Tipptasten am Lenkrad des Fahrzeuges handelt. Über diese Tipptasten wird zum einen die gewünschte Fahrstufe P, R, N oder D ausgewählt. Innerhalb der Fahrstufe D werden ferner über diese Tipptasten 3, 4 der Fahrstufen-Eingabeeinheit die verschiedenen Gänge 1 - 5 bei einem 5-Gang-Getriebe angewählt. Die Fahrstufen-Eingabeeinheit 2 ist zur Anbindung an den Fahrzeug-Steuerbus 1 mit einer elektronischen Wahlmeldeeinheit 5 gekoppelt, die die Information über die gewählte Fahrstufe/Gang gemäß dem verwendeten Busprotokoll kodiert an den Steuerbus 1 übergibt. Ferner steuert die Wahlmeldeeinheit 5 eine Anzeigeeinrichtung 6 z. B. in Form eines LCD-Displays im Armaturenbrett des Fahrzeuges an. Dort wird die jeweils gewählte Fahrstufe/Gang visualisiert, wie dies in Fig. 1 durch einen Pfeil bei der Parkstellung P angedeutet ist.

Zum Getriebekomplex gehört ferner eine ebenfalls an den Fahrzeug-Steuerbus 1 angeschlossene elektronische Getriebesteuerung 7. Diese steuert Aktuatoren 8, 9 an, die die gewählte Fahrstufe P, R, N oder D sowie den entsprechenden Gang einstellen.

In die gesamte Steuereinrichtung ist ferner eine elektronische Feststellbremseinrichtung einbezogen, die im vorliegenden Falle eine Handbremseinrichtung 10 ist und ein an den Fahrzeug-Steuerbus 1 angeschlossenes, elektronisches Handbremsfunktions-Steuergerät 11 aufweist. Diesem Handbremsfunktions-Steuergerät 11 ist eine manuelle Handbrems-Eingabeeinheit 12 zugeordnet, die den üblichen Handbrems-Stockhebel zwischen den Vordersitzen eines Fahrzeuges ersetzt. Über diese Handbrems-Eingabeeinheit 12 wird vom Fahrer die Handbremsfunktion aktiviert bzw. deaktiviert. Die Feststellung der Fahrzeugbremse erfolgt durch einen Handbremsen-Aktuator 13, der über eine Ansteuerung durch das Handbremsfunktions-Steuergerät 11 die Fahrzeugbremse anzieht bzw. wieder löst.

Schließlich ist ein Bremspedalsensor 14 vorgesehen, der die Betätigung des Bremspedals überwacht und ein entsprechendes Signal ausgibt. Der Bremspedalsensor 14 ist dabei über das ebenfalls an dem Fahrzeug-Steuerbus 1 angeschlossene ABS-System 15 in die Steuereinrichtung eingebunden. Letzteres stellt praktisch die Schnittstelle zwischen dem Fahrzeug-Steuerbus 1 und dem Bremspedalsensor 14 dar.

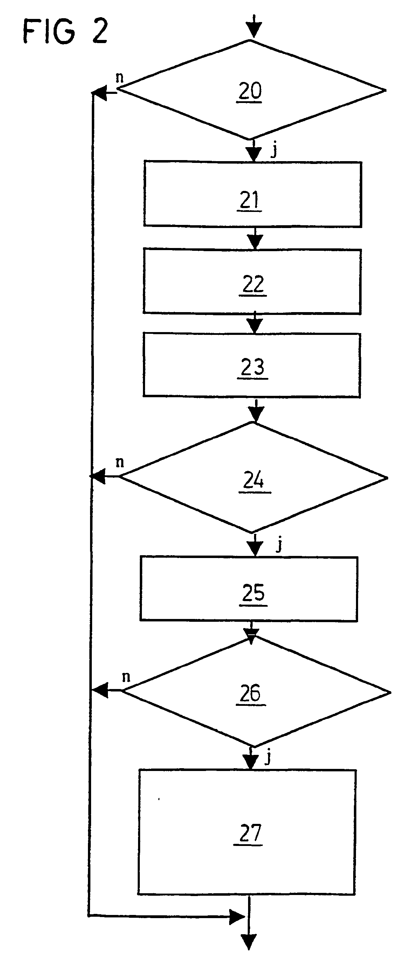

Anhand von Fig. 2 ist nun die bei der kombinierten Steuereinrichtung für die Handbrems- und Parksperrenfunktion realisierte Ablaufsteuerung der vorstehend erörterten Komponenten wie folgt zu erläutern:
- Schritt 20:: Abfrage, ob vom Fahrer an der Fahrstufen-Eingabeeinheit 2 die Parkstellung P gewählt wurde; falls ja ("j" in Fig. 2), wird von der Wahlmeldeeinheit 5 über den Fahrzeug-Steuerbus 1 die aktuell gewünschte Fahrstufe P an die elektronische Getriebesteuerung 7 und das Handbremsfunktions-Steuergerät 11 übermittelt;
- Schritt 21:: daraufhin Ansteuern des Handbrems-Aktuators 13 durch das Handbremsfunktions-Steuergerät 11 und dauerhafte Aktivierung der Handbremse des Fahrzeuges;
- Schritt 22:: im Handbremsfunktions-Steuergerät 11 wird ein Merker "Verriegelung der Handbremse" gesetzt, d. h. die Handbremse ist elektronisch verriegelt und kann über die Handbrems-Eingabeeinheit 12 mit den beiden Tastschaltern 16 ("Handbremse-Ein") und 17 ("Handbremse-Aus") nicht mehr gelöst werden;
- Schritt 23:: in der Wahlmeldeeinheit 5 wird die Parkstellung P elektronisch verriegelt, so daß die Anwahl einer von Fahrstufe P abweichenden Fahrstufe R, N, D verhindert wird;
- Schritt 24:: Abfrage über den Fahrzeug-Steuerbus 1, ob der Bremspedalsensor 14 das Bremssignal gesetzt hat, die Bremse also getreten ist; trifft dies zu ("j" in Fig. 2), so schreitet die Ablaufsteuerung fort zu;
- Schritt 25:: in der Wahlmeldeeinheit 5 wird die Fahrstufe P entriegelt, d. h. der Fahrer kann eine davon abweichende Fahrstufe R, N oder D über die Fahrstufen-Eingabeeinheit 2 eingeben;
- Schritt 26:: Abfrage, ob eine von P abweichende Fahrstellung gewählt wurde; trifft dies zu ("j" in Fig. 2), schreitet die Ablaufsteuerung fort zu;
- Schritt 27:: die elektronische Verriegelung der Handbremse im Handbremsfunktions-Steuergerät 11 wird zurückgesetzt, d. h., daß der Fahrer über die Handbrems-Eingabeeinheit 12 die Handbremse wieder lösen kann.

Falls die Abfrage-Schritte 20, 24 und 26 als Ergebnis ein "nein" ("n" in Fig. 2) erhalten, wird die gesamte Ablaufroutine verlassen und mit einem festgelegten Takt neu gestartet.

Als optionale Funktionen können auf der Basis der erfindungsgemäßen Steuereinrichtung auch eine sogenannte "Auto-P-Funktion" sowie eine "automatische" Steigungs-Anfahrthilfe-Funktion (sogenannte "Auto-Hill-Holder-Funktion") realisiert werden.

Bei der Auto-P-Funktion wird über eine Abfrageroutine ermittelt, ob die Zündung des Fahrzeuges ausgeschaltet ist. Trifft dies zu, wird die Fahrstufe P automatisch eingelegt und die Handbremse aktiviert.

Die automatische Hill-Holder-Funktion wird bei AutomatikGetrieben dadurch realisiert, daß gegen ein Zurückrollen des Fahrzeuges an Steigungen quasi eine langsame Vorwärtsfahrt initiiert wird. Dieses ist bei automatisierten Handschaltgetrieben an sich nur durch eine schleifende Aktivierung der Kupplung zu realisieren, was aus Verschleißgründen nicht gewünscht ist. Auf der Basis der vorliegenden erfindungsgemäßen Steuereinrichtung ist es nun möglich, eine automatische Hill-Holder-Funktion dadurch zu realisieren, daß die Steuereinrichtung die Feststellbremsfunktion durch Anziehen der Feststellbremse aktiviert. Dadurch wird das Fahrzeug gehalten, wobei bei Gasgeben und Beginnen der Vorwärtsfahrt die Feststellbremse entsprechend gelöst werden kann.

Zusammenfassend weist die erfindungsgemäße kombinierte Steuereinrichtung für die Feststellbrems- und Parksperrenfunktion von Kraftfahrzeugen mit Automatik oder automatisiertem Handschalt-Getriebe verschiedene Vorteile auf:
- Die für die mechanische Realisierung der Parksperrenfunktion im Getriebe notwendigen Komponenten, wie mechanische und hydraulische Bauteile mit entsprechenden Aktuatoren und deren Ansteuerelektronik können entfallen.
- Die Steuereinrichtung kann auch in Fahrzeugen mit automatisierten Handschaltgetrieben eingesetzt werden, wobei die in der üblichen Getriebetechnik konzeptbedingt nur in "echten" Automatikgetrieben implementierte Parksperrenfunktion ohne nennenswerten Zusatzaufwand nachgebildet werden kann.
- Dementsprechend können die Module zur Eingabe der vom Fahrer gewünschten Fahrstufe oder des gewünschten Ganges in Form von z. B. Tasten am Lenkrad als Gleichteil für Automat- und automatisierte Handschalt-Getriebe eingesetzt werden.
- Die Handbremse kann über die Fahrstufen-Eingabeeinheit insbesondere deren Gang-Tipp-Tasten durch Anwahl der Parkstellung eingelegt werden. Eine zusätzliche manuelle Aktivierung kann entfallen.
- Die kombinierte Steuereinrichtung kann auch mit einer isolierten, also z. B. im Motorraum plazierten Getriebesteuerung, die nicht in das Getriebe integriert ist, realisiert werden.

## Patentansprüche

1. Kombinierte Steuereinrichtung für die Feststellbrems- und Parksperrenfunktion von Kraftfahrzeugen mit Automatik- oder automatisiertem Handschalt-Getriebe, wobei:
- eine manuelle Fahrstufen-Eingabeeinheit (2) für die Fahrstufe des Fahrzeuges,
- eine damit verbundene elektronische Wahlmeldeeinheit (5), die an einen Fahrzeug-Steuerbus (1) angeschlossen ist,
- eine ebenfalls an den Fahrzeug-Steuerbus (1) angeschlossene elektronische Getriebesteuerung (7), die Aktuatoren (8, 9) zur Einstellung des Getriebes in die jeweils gewünschte, von der Wahlmeldeeinheit (5) gemeldete Fahrstufe ansteuert,
- eine elektronische Feststellbremseinrichtung (10) mit
= einem elektronischen Feststellbremsfunktions-Steuergerät (11),
= einer damit verbundenen manuellen Feststellbrems-Eingabeeinheit (12) für die Deaktivierung/Aktivierung der Feststellbremsfunktion, und
= einem ebenfalls mit dem Steuergerät (11) verbundenen Aktuator (13) für die Fahrzeugbremse,
- einen mit dem Fahrzeug-Steuerbus (1) über eine Schnittstelle (15) gekoppelten Bremspedalsensor (14) zur Überwachung der Betätigung des Bremspedals, und
- eine Ablaufsteuerung der vorstehenden Komponenten derart, daß bei Wahl der Parkstellung an der Fahrstufen-Eingabeeinheit (2) über die Wahlmeldeeinheit (5) und den Steuerbus (1) die Feststellbremseinrichtung (10) aktiviert und die Fahrzeugbremse festgestellt wird.

2. Steuereinrichtung nach Anspruch 1, **dadurch gekennzeichnet, daß** die Ablaufsteuerung bei aktivierter Feststellbremse eine elektronische Verriegelung der Parkstellung vornimmt, die nur durch eine Betätigung des Bremspedals lösbar ist.

3. Steuereinrichtung nach Anspruch 1 oder 2, **dadurch gekennzeichnet, daß** die Ablaufsteuerung bei aktivierter Parkstellung eine elektronische Verriegelung der Feststellbremse vornimmt, die nur durch eine Deaktivierung der Parkstellung lösbar ist.

4. Steuereinrichtung nach einem der Ansprüche 1 bis 3, **dadurch gekennzeichnet, daß** die manuelle Fahrstufen-Eingabeeinheit (2) durch einen Fahrstufen-Wählhebel auf der Fahrzeug-Mittelkonsole oder eine Tipptasten-Eingabeeinheit (3, 4) am Lenkrad des Fahrzeuges gebildet ist.

5. Steuereinrichtung nach einem der Ansprüche 1 bis 4, **dadurch gekennzeichnet, daß** der Bremspedalsensor (14) und seine Schnittstelle (15) mit dem Fahrzeug-Steuerbus (1) Teil des Anti-Blockier-Bremssystems des Fahrzeuges sind.

6. Steuereinrichtung nach einem der Ansprüche 1 bis 5, **dadurch gekennzeichnet, daß** durch die Ablaufsteuerung bei abgeschalteter Zündung automatisch die Parkstellung aktivierbar ist.

7. Steuereinrichtung nach einem der Ansprüche 1 bis 6, **dadurch gekennzeichnet, daß** durch die Ablaufsteuerung eine Steigungs-Anfahrhilfe-Funktion durch automatische Aktivierung und Deaktivierung der Feststellbremsfunktion realisierbar ist.

## Claims

1. Combined control device for the parking brake and park lock function of motor vehicles with automatic transmission or automated manual transmission, with:
- a manual driving-position input unit (2) for the driving position of the vehicle,
- an electronic selection signaling unit (5) which is connected thereto and is coupled to a vehicle control bus (1),
- an electronic transmission controller (7) which is also connected to the vehicle control bus (1) and drives actuators (8, 9) for placing the transmission in the respectively desired driving position which is signaled by the selection signaling unit (5),
- an electronic parking brake device (10) having
= an electronic parking brake function controller (11),
= a manual parking brake input unit (12), connected thereto, for deactivating/ activating the parking brake function, and
= an actuator (13), also connected to the controller (11), for the vehicle brake,
- a brake pedal sensor (14), coupled to the vehicle control bus (1) via an interface (15), for monitoring the activation of the brake pedal, and
- a sequence controller of the above components such that when the parked position is selected on the driving-position input unit (2), the parking brake device (10) is activated, and the vehicle brake put on, by means of the selection signaling unit (5) and the control bus (1).

2. Control device according to Claim 1, **characterized in that**, when the parking brake is activated, the sequence controller carries out electronic locking of the parked position, which can be released only be activating the brake pedal.

3. Control device according to Claim 1 or 2, **characterized in that**, when the parked position is activated, the sequence controller carries out electronic locking of the parking brake, which can be released only by deactivating the parked position.

4. Control device according to one of Claims 1 to 3, **characterized in that** the manual driving-position input unit (2) is formed by a driving-position selector lever on the center console of the vehicle or a momentary-switch input unit (3, 4) on the steering wheel of the vehicle.

5. Control device according to one of Claims 1 to 4, **characterized in that** the brake pedal sensor (14) and its interface (15) with the vehicle control bus (1) are part of the antilock brake system of the vehicle.

6. Control device according to one of Claims 1 to 5, **characterized in that**, when the ignition is switched off, the sequence controller can automatically activate the parked position.

7. Control device according to one of Claims 1 to 6, **characterized in that** the sequence controller can carry out a hill start aid function by automatically activating and deactivating the parking brake function.

## Revendications

1. Dispositif de commande combiné pour la fonction frein de stationnement et la fonction blocage de parc de véhicules à boîte de vitesses automatique ou manuelle automatisée, dans laquelle sont prévus :
- une unité d'entrée manuelle des gammes (2) pour la gamme du véhicule,
- une unité électronique d'annonce de sélection (5), liée à la précédente, connectée à un bus de commande (1) du véhicule,
- une commande électronique de boîte de vitesses (7), elle aussi connectée au bus de commande (1) du véhicule, qui pilote les actionneurs (8, 9) pour mettre la boîte de vitesses dans la gamme souhaitée qui est annoncée par l'unité (5) d'annonce de sélection,
- un dispositif de frein de stationnement électronique (10) comprenant
= un appareil de commande électronique (11) de la fonction frein de stationnement,
= une unité d'entrée manuelle (12) de frein de stationnement liée au précédent, pour la désactivation/activation de la fonction frein de stationnement, et
= un actionneur (13), lui aussi lié à l'appareil de commande (11), pour le frein du véhicule,
- un capteur de pédale de frein (14) couplé au bus de commande (1) du véhicule par l'intermédiaire d'une interface (15) et destiné à la surveillance de l'actionnement de la pédale de frein, et
- une commande de déroulement des composants précités, qui est telle que, si la position parc est sélectionnée sur l'unité d'entrée de gamme (2), le dispositif de frein de stationnement (10) est activé et le frein du véhicule est bloqué par l'intermédiaire de l*'*unité d'annonce de sélection (5) et du bus de commande (1).

2. Dispositif de commande selon la revendication 1, **caractérisé en ce que**, lorsque le frein de stationnement est activé, la commande de déroulement exécute un verrouillage électronique de la position parc, laquelle ne peut être déverrouillée que par un actionnement de la pédale de frein.

3. Dispositif de commande selon la revendication 1 ou 2, **caractérisé en ce que**, lorsque la position parc est activée, la commande de déroulement exécute un verrouillage électronique du frein de stationnement, lequel ne peut être desserré que par une désactivation de la position parc.

4. Dispositif de commande selon une des revendications 1 à 3, **caractérisé en ce que** l'unité d'entrée manuelle des gammes (2) est formée par un levier sélecteur de gamme placé sur la console centrale du véhicule, ou par une unité d'entrée à touches à impulsion (3, 4) placée sur le volant de direction du véhicule.

5. Dispositif de commande selon une des revendications 1 à 4, **caractérisé en ce que** le capteur de pédale de frein (14) et son interface (15) avec le bus de commande (1) du véhicule font partie du système d'anti-blocage de freinage du véhicule.

6. Dispositif de commande selon une des revendications 1 à 5, **caractérisé en ce que** la position parc peut être activée automatiquement par la commande de déroulement lorsque l'allumage est coupé.

7. Dispositif de commande selon une des revendications 1 à 6, **caractérisé en ce qu'**une fonction aide au démarrage en côte peut être réalisée par la commande de déroulement, par activation et désactivation automatiques de la fonction frein de stationnement.
